# EUROPÄISCHE PATENTSCHRIFT

(11) **EP 0 996 206 B1**
(45) Veröffentlichungstag und Bekanntmachung des Hinweises auf die Patenterteilung: **22.11.2006**
(21) Anmeldenummer: 99118079.5
(22) Anmeldetag: 24.09.1999
(51) Int. Cl.: H02B 1/30

(54) **Verteilerschrank**
Distribution cabinet
Armoire de distribution

(30) Priorität: 18.10.1998 DE 29818507 U
(43) Veröffentlichungstag der Anmeldung: 26.04.2000
(73) Patentinhaber: Muschik, Hans, 85649 Hofolding (DE)
(72) Erfinder: Muschik, Hans, 85649 Hofolding (DE)
(74) Vertreter: Neidl-Stippler, Cornelia

(56) Entgegenhaltungen:
- DE-A- 19 500 739
- DE-A- 19 639 889

## Beschreibung

Die Erfindung betrifft einen Verteilerschrank, insbesondere Wandverteilerschrank, welcher ein in wesentlichen C-förmiges Grundmodul mit Rückwandabschnitt, Bodenabschnitt und Deckenabschnitt mit jeweils in etwa U-förmig umgebogenem Randbereich aufweist. (Siehe DE-A1-1 95 00 739). Wandverteilerschränke werden häufig für die Verkabelung von Häusern eingesetzt. Bei diesen treten Kabelstränge aus einem allgemeinen Hausanschluß (bspw. Telefon) aus und werden dann zu verschiedenen Verbrauchern verzweigt. Diese Verbraucher haben bspw. getrennte Zähler, unterschiedliche angeschlossene Komponenten. Häufig ist es erwünscht, diese Einzelanschlüsse aber auch den Hausanschluß selbst vor unbefugtem Zugang zu sichern - bspw. vor unbefugtem Zutritt zu Telefonleitungen, Elektrizitätsleitungen aber auch zu Datenleitungen.

Bisher wurden derartige Wandverteilerschränke bspw. von der Fa RITTAL angeboten. Es handelte sich dabei um abgeschlossene Metallschränke mit mindestens einer fest angebrachten Türe, die ggf. durch ein Schloß abschließbar war.

Diese bekannten Wandverteilerschränke waren insofern nachteilig, als sie für verschiedene Größen der Verteilung unterschiedliche Größen erforderten. Ferner war bei der Installation häufig das Gehäuse und/oder die Türe im Wege, so daß sich im engen Verteilerschrank oder bei räumlich eingeschränkten Verhältnissen in der Umgebung des Verteilerschrankes Probleme beim Arbeiten ergaben.

Es ist demgegenüber Aufgabe der Erfindung, einen Wandverteilerschrank zu schaffen, der einfacher zu schaffen ist, aber auch leichter zu handhaben ist.

Die Aufgabe wird erfindungsgemäß durch einen Verteilerschrank gelöst, der im U-förmig umgebogenen Randbereich des Deckenabschnitts und des Bodenabschnitts vorgesehene Vertiefungen zur Aufnahme von Federstiften; mindestens eine in die Vertiefungen mit Federstiften einrastende Seitenwand, mindestens eine mittels an ihr befestigter Federstifte als Drehachsen in Vertiefungen in der umgebogenen Randbereich von Bodenabschnitt und Deckenabschnitt einrastende Türe aufweist.

Dadurch, daß die Türe durch die Einhängen mittels an ihr befestigter Federstifte in in der umgebogenen Randbereich von Deckenabschnitt und Bodenabschnitt vorgesehene Vertiefungen leicht ein- und ausgehängt werden kann - bspw. durch Einschieben eines flachen Werkzeugteils, wie einer Schraubendreherklinge, unter einen Federstift - kann diese problemlos herausgenommen und im Verteilerschrank gearbeitet werden, ohne daß die Türe ständig im Wege ist, was insbesondere bei der Anbringung des Verteilerschrankes in Ecken sonst üblicherweise der Fall war. Ggf. können nach dem Ausbau der Türe auch Seitenwände, die ebenfalls erfindungsgemäß durch bevorzugt nur vom Schankinneren zugängliche Federstifte eingehängt sind, vorübergehend ausgehängt und entfernt werden, um die Zugänglichkeit noch zu verbessern. Nach Abschluß der Arbeiten im Verteilerschrank können die Seitenwand/-wände und schließlich die Türe wieder über die Federelemente reversibel eingebaut werden.

Da die Federstifte nur vom Verteilerschrankinneren her zugänglich sind, ist der Verteilerschrank abschließbar und kann nur dann auseinandergebaut werden, falls die Türe geöffnet wird. Somit ist eine Sicherheit gegenüber unbefugtem Zugang zum Inneren gegeben.

An ein im wesentlichen C-förmiges Grundmodul können weitere C-förmige Grundmoduln "angeschlossen" werden - bspw. durch Schraubverbindungen durch die umgebogenen Kanten - so daß sodann ein größerer Verteilerschrank mit zwei Türen entsteht. Auf diese Art und Weise können beliebig viele C-förmige Grundmoduln aneinandergereiht werden, von denen jedes eine einzelne Türe aufweist und durch eine Wand vom nächsten Modul getrennt werden kann, falls erwünscht. Dadurch kann dann bspw. ein separater Verteilerschrank für jeden Verbraucher bei einer Hausinstallation mit mehreren Parteien bereitgestellt werden.

Es ist auch möglich, weitere Grundmoduln auf ein erstes Grundmodul aufzusetzen und so den Verteilerschrank um weitere Moduln nach oben zu erweitern.

Erfindungsgemäß können somit modulartige Einzelkomponenten vorgesehen werden, die bei Vorhalten derselben verschiedenste Verteilerschrankgrößen ermöglichen.

Meist weist der Verteilerschrank mindestens eine Öffnung im Bodenabschnitt für die aus einem Hausanschluß oder einem Netzwerkanschluß stammenden Kabel oder mindestens einer Wand oder im Deckenabschnitt auf, während die Verteilung im Verteilerschrank erfolgt.

Es ist sinnvoll, daß mindestens am Rückwandabschnitt Kabelführungen vorgesehen sind.

Es können an der Rückwandabschnitt Einrichtungen zur Befestigung von Trägerplatten, Kabelführungen od. dgl. vorgesehen sein.

Vorteilhafterweise sind im Grundmodul des Verteilerschranks in dessen umgebogenen Randbereichen in einem vorbestimmten Raster Vertiefungen/Öffnungen zur Aufnahme von Komponenten in bspw. 19"Technik oder in metrischer Technik vorgesehen, so daß 19" oder aber metrische Komponenten, wie Patch-Felder oder dgl. eingebaut werden können.

Die Vertiefungen können Durchgangsöffnungen, wie bspw. Bohrungen sein.

Häufig ist es sinnvoll, falls unbefugter Zugang zum Verteilerschrankinneren vermieden werden soll, daß die Türe eine Verschlußeinrichtung, wie ein Schloß aufweist.

Vorteilhafterweise ist das C-förmige Grundmodul aus einem einzigen Zuschnitt aus dafür geeignetem Material wie Blech, Kunststoff, auch glasfaserverstärktem Kunststoff, Sandwhich-Werkstoffe, laminierte Werkstoffe od. mehrschichtigen Werkstoffen geformt - dadurch ist eine hohe Widerstandsfähigkeit bei leichtem Gewicht und einfacher Herstellung gegeben.

Nachfolgend soll die Erfindung näher anhand der begleitenden Zeichnung, die verschiedene Ausführungsformen zeigt, auf die die Erfindung aber keineswegs eingeschränkt ist, erläutert werden. Dabei zeigt:
Fig. 1a eine Ausführungsform eines Grundmoduls in perspektivischer Ansicht
Fig. 1b eine seitliche Draufsicht auf das Grundmodul der Fig.1a
Fig. 2a eine perspektivische Seitenansicht auf einen geschlossenen Verteilerschrank mit abgenommener Seitenwand
Fig. 2b in perspektivischer Ansicht den Verteilerschrank der Fig. 2a geschlossen,
Fig. 3a eine perspektivische Ansicht zweier aneinander befestigte Grundmoduln mit einem senkrechten Feld;
Fig. 3b eine perspektivische Ansicht des Verteilerschrankes der Fig. 3a von der anderen Seite
Fig. 4 ein perspektivische Ansicht eines geschlossenen Verteilerschrankes, wobei der Deckenabschnitt des C-förmigen Grundmoduls nicht dargestellt ist; und
Fig. 5 eine perspektivische Ansicht des geschlossenen Verteilerschrankes der Fig. 5 von hinten, wobei sowohl der Deckenabschnitt als auch der Rückwandabschnitt nicht dargestellt sind.

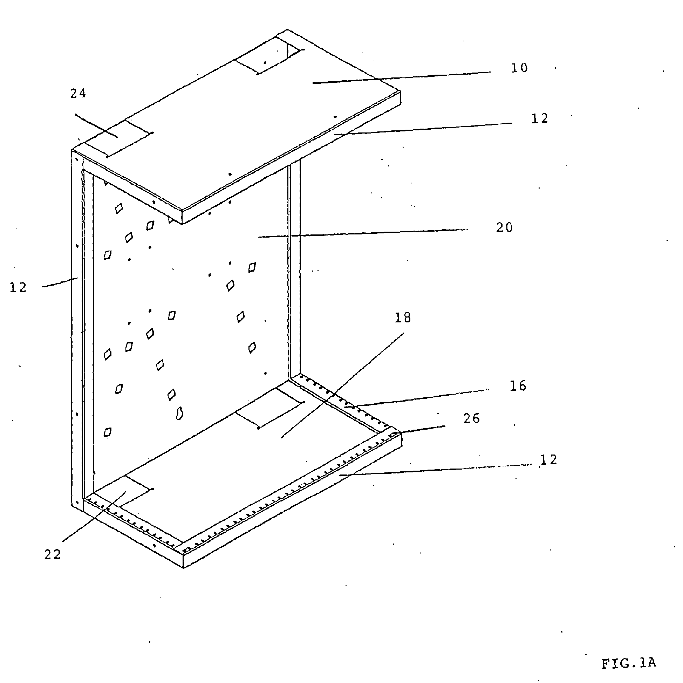

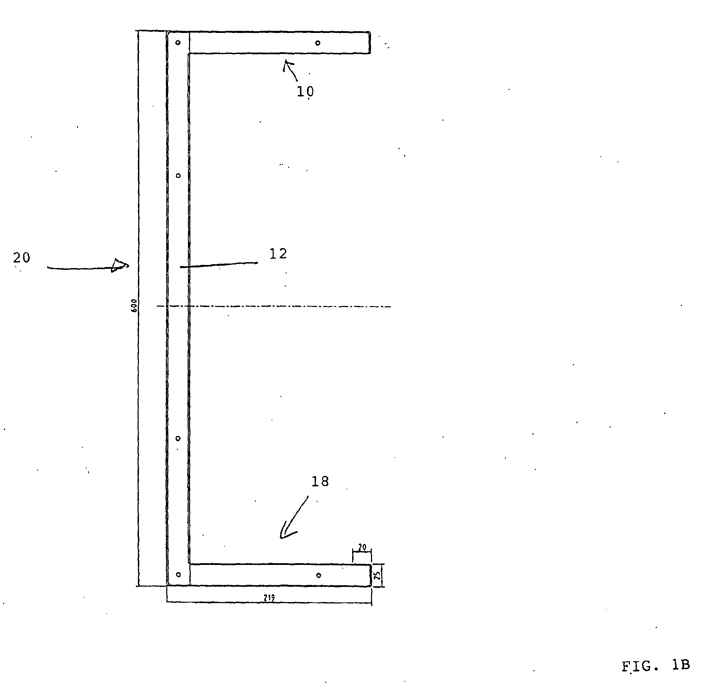

Wie in Fig. 1a gezeigt, bildet ein Grundmodul, das aus einem einzigen entsprechend C-förmig gebogenen Zuschnitt hergestellt ist, dessen Randbereiche U-förmig umgebogen sind, mit seinem Deckenabschnitt 10, seinem Rückwandabschnitt 20 und seinem Bodenabschnitt 18 eine Grundeinheit. Dabei können - je nach Bedarf - Öffnungen 24 für Kabeldurchgänge im Deckenabschnitt 10, Befestigungseinrichtungen - hier ebenfalls Öffnungen - im Rückwandabschnitt 20 und Öffnungen für Kabeldurchgänge 22 im Bodenabschnitt 18 vorgesehen sein. Jeweils im Randbereich sind die Kantenabschnitte von Deckenabschnitt, Rückwandabschnitt und Bodenabschnitt 18 U-förmig umgebogen. Auf dem zum jeweiligen Abschnitt parallelen Schenkel des U sind - bevorzugt in einem Rastermaß - Bohrungen 26 im Deckenabschnitt und im Bodenabschnitt vorgesehen, in die sodann Federstifte einrastbar sind. Aus Fig. 1b ergibt sich die Draufsicht auf einen Querschnitt durch die Rückwand eines C-förmigen Grundmoduls aus der der umgebogene Kantenbereich des Bodenteils - von oben gesehen - ersichtlich. Hier sind zur Vereinfachung die Bohrungen zum Einrasten von Federstiften od. dgl. nur teilweise dargestellt.

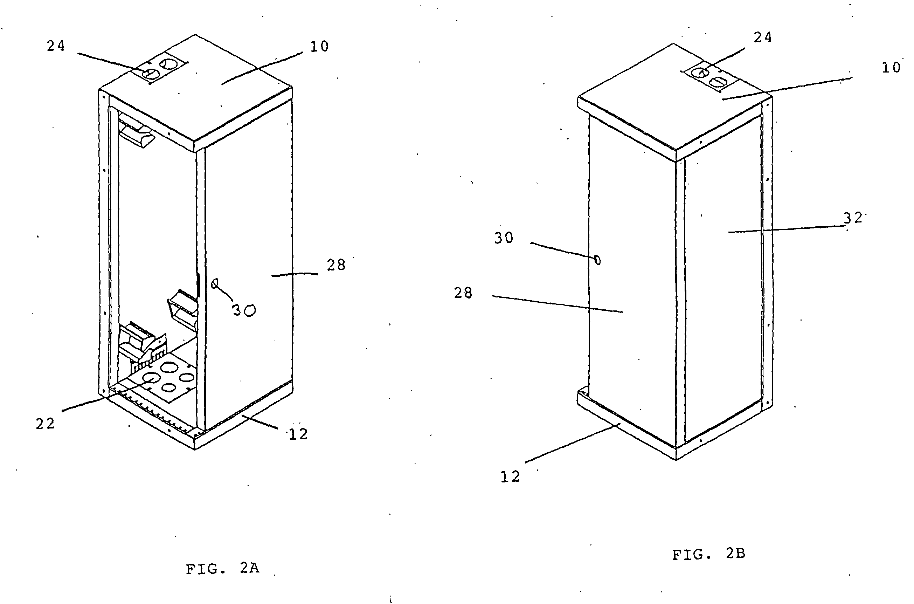

Aus Fig. 2a ist ein bereits weiter fertiggestelltes Wandverteilerschrank ersichtlich, wobei am Grundmodul bereits ausgeformte Kabeldurchgänge 24, 22 im Deckenabschnitt und im Bodenabschnitt angebracht sind - ferner ist bereits die Türe 28 durch Federstifte, die in Bohrungen im U-förmig umgebogenen Randbereich des unteren Bodenabschnitts und im oberen Deckenabschnitts des C-förmigen Grundmoduls eingerastet eingehängt

Die linke Seitenwand ist abgenommen, so daß ersichtlich ist, daß hier bereits Aufnahmen zum Aufwickeln von Lichtwellenleiterkabeln vorgesehen sind, mittels derer überschüssige Kabellängen im Verteilerschrank sicher gelagert werden können. In Fig. 2 b ist der Verteilerschrank nun mit geschlossener Seitenwand 32 dargestellt. Hier ist ersichtlich, daß die Seitenwand 32 sich unterhalb des U-förmig u umgebogenen Seitenabschnitts befindet, also deren Federstifte, mittels derer sie eingehängt ist, nicht von außen zugänglich sind.

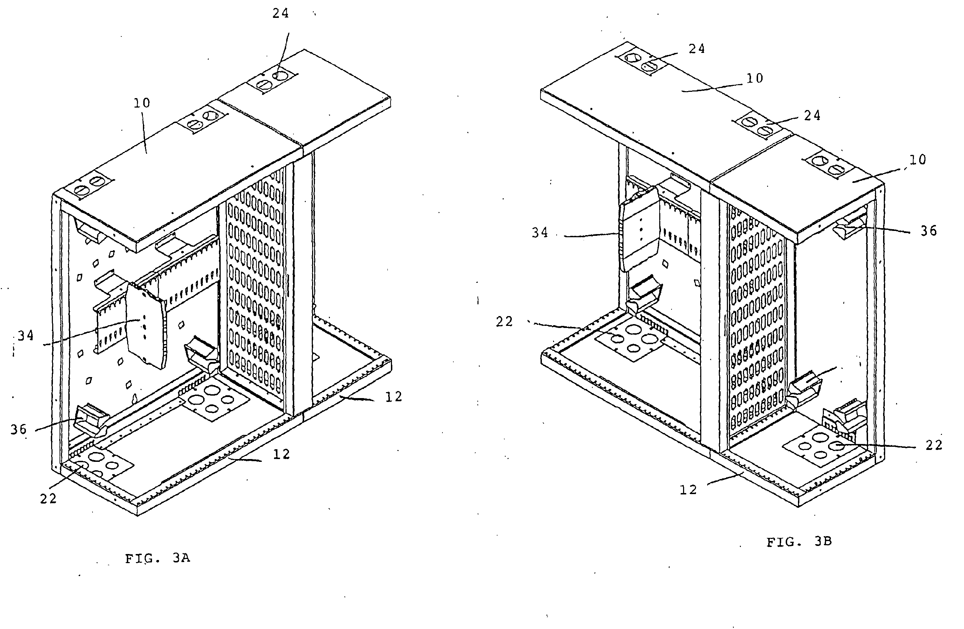

In Fig. 3 a ist dargestellt, wie verschiedene Grundmoduln aneinandergereiht zur Her stellung eines größeren Verteilerschrankes eingesetzt werden. Hier sind ein größeres Grundmodul mit einem kleineren Grundmodul an ihren Kanten durch Aneinanderschrauben im Kantenbereich verbunden. Diese Ausgestaltung dient als modularer Aufbau mit einer Einheit für die reine Kabelaufteilung von Stammkabeln auf Einzelkabel und das kleinere Element dient als Anbaueinheit zur Aufnahme des Faservorrats und von Patch-Kabeln. Im Verbindungsbereich ist über Federstifte ein Feld eingehängt, das zur Verteilung dient. Im linken Grundmodul ist eine Befestigung für Spleißkassetten für LWL eingehängt, wobei unterhalb derselben Aufnahmen für überschüssige Kabellängen vorgesehen sind. Aus Fig. 3b, die dieselbe Anordnung von der anderen Seite zeigt, ist ersichtlich, daß hier das kleinere C-förmige Grundmodul zur Aufnahme überschüssiger LWL-Kabellängen eingesetzt wird und demzufolge mit Aufwikkeleinheiten für LWL bestückt ist. Diese Anordnung bewirkt demzufolge die Verteilung der verschiedenen Anschlüsse im linken Teil, während überschüssige Kabellängen im linken Verteilerschrankteil aufbewahrt werden.

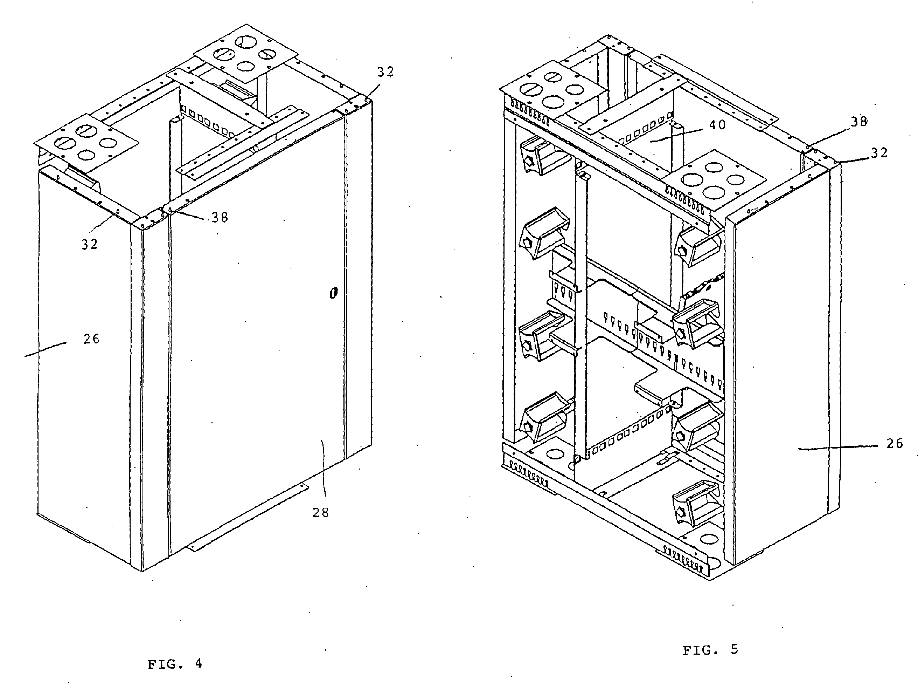

In Fig. 4 ist ein Verteilerschrank ohne das C-förmige Grundmodul in perspektivischer Ansicht von Vorne mit geschlossener Türe 28 dargestellt. Man erkennt hier die Seitenwände 26, die mittels Federstiften 32 in Vertiefungen im hier nicht dargestellten Grundmodul befestigt werden können - als auch die Türe 28, deren als Drehachsen wirkende Federstifte 38 ein Schwenken der Türe 28 erlaubt.

In Fig. 5 ist der gleiche Verteilerschrank von hinten ohne Grundmodul dargestellt. Dabei ist ersichtlich, wie die LWL-Kabelbügel in Öffnungen im Rückwandabschnitt gefestigt werden, und wie auch die Kabeldurchgänge am Decken- und Bodenabschnitt des C-förmigen Grundmoduls angebracht werden können. Man erkennt hier eine senkrechte Trennwand 40 im Grundmodul.

Obwohl die Erfindung anhand bevorzugter Ausführungsformen beschrieben wurde, ist dem Fachmann offensichtlich, daß mannigfache Abwandlungen innerhalb des Schutzbereiches der Ansprüche möglich sind, so daß der Schutzbereich keinesfalls darauf eingeschränkt ist..

## Patentansprüche

1. Verteilerschrank, insbesondere Wandverteilerschrank, welcher ein im wesentlichen C-förmiges Grundmodul mit Rückwandabschnitt (20), Bodenabschnitt (18) und Deckenabschnitt (10) mit jeweils in etwa U-förmig umgebogenem Randbereich (16) aufweist, **gekennzeichnet durch**
- im U-förmig umgebogenen Randbereich (16) des Deckenabschnitts (10) und des Bodenabschnitts (18) vorgesehene Vertiefungen (26) zur Aufnahme von Federstiften (38);
- mindestens eine in die Vertiefungen (26) mit Federstiften einrastende Seitenwand (32), und
- mindestens mittels an ihr befestigter Federstifte als Drehachsen in Vertiefungen (26) in dem umgebogenen Randbereich von Bodenabschnitt (18) und Deckenabschnitt (10) einrastende Türe (28).

2. Verteilerschrank nach Anspruch 1, ferner **gekennzeichnet durch** mindestens eine Öffnung (22) im Bodenabschnitt (18) oder mindestens einer Wand oder im Deckenabschnitt (10) zum Eingang von Kabeln.

3. Verteilerschrank nach einem der vorangehenden Ansprüche, **dadurch gekennzeichnet, daß** am Rückwandabschnitt (20) Kabelbügel (36) vorgesehen sind.

4. Verteilerschrank nach einem der vorangehenden Ansprüche, **dadurch gekennzeichnet, daß** an der Rückwandabschnitt (20) Einrichtungen zur Befestigung von Trägerplatten, Kabelführungen, Spleißboxen od. dgl. vorgesehen sind.

5. Verteilerschrank nach einem der vorangehenden Ansprüche, **dadurch gekennzeichnet, daß** im Verteilerschrank in einem vorbestimmten Raster Vertiefungen (26) zur Aufnahme von Komponenten in 19"Technik oder in metrischer Technik vorgesehen sind.

6. Verteilerschrank nach einem der vorangehenden Ansprüche, **dadurch gekennzeichnet, daß** die Vertiefungen (26) Durchgangsöffnungen sind.

7. Verteilerschrank nach einem der vorangehenden Ansprüche, **dadurch gekennzeichnet, daß** die Türe (28) eine Verschlußeinrichtung (30), wie ein Schloß aufweist.

8. Verteilerschrank nach einem der vorangehenden Ansprüche, **dadurch gekennzeichnet, daß** das C-förmige Grundmodul aus einem einzigen Zuschnitt aus Blech, Kunststoff, auch glasfaserverstärktem Kunststoff, geformt ist.

## Claims

1. Distribution box, in particular wall distribution box, which comprises a substantially C-shaped base module having rear-wall section (20), bottom section (18) and top section (10), each having an edge region (16) bent approximately into a U-shape, **characterized by**
- indentations (26) being provided in the U-shaped bent edge region (16) of the top section (10) and of the bottom section (18) for receiving spring-loaded pins (38),
- at least one side wall (32) engaging in the indentations (26) by spring-loaded pins, and
- at least one door (28) engaging in indentations (26) in the bent edge region of bottom section (18) and top section (10) by means of spring-loaded pins attached to it as hinges.

2. Distribution box according to Claim 1, also **characterized by** at least one hole (22) in the bottom section (18) or at least in one wall or in the top section (10) for the entry of cables.

3. Distribution box according to one of the preceding claims, **characterized in that** cable clips (36) are provided on the rear-wall section (20).

4. Distribution box according to one of the preceding claims, **characterized in that** devices for attaching mounting plates, cable guides, splice boxes or the like are provided on the rear-wall section (20).

5. Distribution box according to one of the preceding claims, **characterized in that** indentations (26) for accommodating components in 19" technology or metric technology are provided in the distribution box in a specific pitch spacing.

6. Distribution box according to one of the preceding claims, **characterized in that** the indentations (26) are through-holes.

7. Distribution box according to one of the preceding claims, **characterized in that** the door (28) has a closing device (30) such as a lock.

8. Distribution box according to one of the preceding claims, **characterized in that** the C-shaped base module is formed from a single pre-cut part made of sheet metal, plastic, even glass-fibre reinforced plastic.

## Revendications

1. Armoire de distribution, notamment armoire de distribution murale, qui présente un module de base essentiellement en forme de C avec une portion de paroi arrière (20), une portion de fond (18) et une portion de couvercle (10), avec une région de bord (16) respective cintrée approximativement en forme de U, **caractérisée par**
- des renfoncements (26) pour recevoir des goupilles élastiques (38), prévus dans la région de bord (16) cintrée en forme de U de la portion de couvercle (10) et de la portion de fond (18) ;
- au moins une paroi latérale (32) s'encliquetant dans les renfoncements (26) avec des goupilles élastiques, et
- au moins une porte (28) s'encliquetant au moyen de goupilles élastiques fixées sur elle, servant de pivots, dans des renfoncements (26) dans la région de bord cintrée de la portion de fond (18) et de la portion de couvercle (10).

2. Armoire de distribution selon la revendication 1, **caractérisée en outre par** au moins une ouverture (22) dans la portion de fond (18) ou au moins une paroi ou dans la portion de couvercle (10) pour l'entrée de câbles.

3. Armoire de distribution selon l'une quelconque des revendications précédentes, **caractérisée en ce que** l'on prévoit des brides de câbles (36) au niveau de la portion de paroi arrière (20).

4. Armoire de distribution selon l'une quelconque des revendications précédentes, **caractérisée en ce que** l'on prévoit sur la portion de paroi arrière (20) des dispositifs pour la fixation de plaques de support, de passages de câbles, de boîtes d'épissurage ou similaires.

5. Armoire de distribution selon l'une quelconque des revendications précédentes, **caractérisée en ce que** l'on prévoit dans l'armoire de distribution, dans un quadrillage prédéfini, des renfoncements (26) pour recevoir des composants dans la technique 19" ou dans la technique métrique.

6. Armoire de distribution selon l'une quelconque des revendications précédentes, **caractérisée en ce que** les renfoncements (26) sont des ouvertures de passage.

7. Armoire de distribution selon l'une quelconque des revendications précédentes, **caractérisée en ce que** la porte (28) présente un dispositif de fermeture (30), comme une serrure.

8. Armoire de distribution selon l'une quelconque des revendications précédentes, **caractérisée en ce que** le module de base en forme de C est formé d'une pièce découpée unique en tôle, en plastique, ou aussi en plastique renforcé par des fibres de verre.
